# EUROPEAN PATENT SPECIFICATION

(11) **EP 4 316 246 B1**
(45) Date of publication and mention of the grant of the patent: **29.10.2025**
(21) Application number: 22880910.9
(22) Date of filing: 06.10.2022
(51) Int. Cl.: A22C 17/00, G06T 7/00, G06T 7/60, A22B 5/00, G06T 7/70

(54) **ACTION POINT CALCULATION SYSTEM FOR MEAT, MEAT PROCESSING SYSTEM, AND ACTION POINT CALCULATION METHOD FOR MEAT**
AKTIONSPUNKTBERECHNUNGSSYSTEM FÜR FLEISCH, FLEISCHVERARBEITUNGSSYSTEM UND AKTIONSPUNKTBERECHNUNGSVERFAHREN FÜR FLEISCH
SYSTÈME DE CALCUL DE POINT D'ACTION POUR VIANDE, SYSTÈME DE TRAITEMENT DE VIANDE ET PROCÉDÉ DE CALCUL DE POINT D'ACTION POUR VIANDE

(30) Priority: 13.10.2021 JP 2021168269
(43) Date of publication of application: 07.02.2024
(73) Proprietor: MAYEKAWA MFG. CO., LTD., Tokyo 135-8482 (JP)
(72) Inventor: HIRAYAMA, Junta, Tokyo 135-8482 (JP); TOKUYAMA, Kotaro, Tokyo 135-8482 (JP); TOKUMOTO, Masaru, Tokyo 135-8482 (JP); YAMASHITA, Tomoki, Tokyo 135-8482 (JP); NOAKE, Tomoya, Tokyo 135-8482 (JP)
(74) Representative: Regimbeau
(86) International application number: PCT/JP2022/037458
(87) International publication number: WO 2023/063215

(56) References cited:
- WO-A1-2020/225154
- WO-A1-2020/225154
- JP-A- 2014 007 982
- JP-A- 2014 007 982
- JP-A- 2018 005 520
- JP-A- 2018 005 520
- JP-A- 2019 537 444
- JP-A- 2019 537 444
- JP-A- 2020 103 284
- JP-A- 2020 176 951
- JP-A- 2020 176 951
- JP-A- 2021 149 142
- JP-A- 2021 149 142
- JP-A- H1 070 652

## Description

### TECHNICAL FIELD

The present disclosure relates to a working point calculation system for meat, a meat processing system, and a working point calculation method for meat.

### BACKGROUND

Technologies for detecting an object using its visual information are described in JP 2014 007982 A, JP 2020 176951 A, JP 2021 149 142 A, WO 2020/225154 A1, JP 201 537444 A, and JP 2018 005520 A. Conventionally, there is known a working point calculation system for meat configured to obtain a working point of meat by calculation. The working point defines, for example, a cutting position of meat. In Patent Document 1, a contour of a bone part is detected based on a first image obtained by photographing a cut surface of a meat part irradiated with blue visible light to excite light emission, and the outline of the cut surface of the meat part is detected based on a second image obtained by photographing the cut surface irradiated with white visible light. Then, the position of the bone part is obtained in accordance with a predetermined rule from the detected relative positions of the outline of the cut surface and the contour of the bone part, and the cutting position of the meat part is determined based on the obtained position of the bone part.

### Citation List

### Patent Literature

Patent Document 1: JP2014-7982A

### SUMMARY

### Technical Problem

However, in the above-described patent document where the position of the bone part is obtained in accordance with the predetermined rule, if an exposure amount of a bone of the meat part photographed varies, the position of the bone part may not be obtained accurately. In addition, in a case where a learning model is used instead of the above-described method to obtain the position of the bone part, it is preferable that a burden of preparing teacher data is low, but the above-described patent document does not disclose a configuration for achieving this.

The object of the present disclosure is to provide a working point calculation system for meat, a meat processing system, and a working point calculation method for meat which are capable of identifying a working point with high accuracy while reducing a burden of preparing teacher data.

### Solution to Problem

According to the present invention, there is provided a working point calculation system as defined in appended claim 1. A meat processing system as well as a working point calculation method for meat is also provided as defined in the corresponding claims according to the present invention. A working point calculation system for meat according to at least one aspect of the present disclosure, includes: an image data acquisition unit configured to acquire image data indicating a photographed image of meat; and a working point acquisition unit configured to acquire working point data for identifying at least one working point where a robot gives working in the meat, by inputting the image data acquired by the image data acquisition unit to a learning model machine-learned using, as teacher data, the image data and correct answer data indicating a key point of the meat included in the photographed image.

A meat processing system according to at least one aspect of the present disclosure, includes: the above-described working point calculation system for meat; and the robot configured to give working to the working point acquired by the working point acquisition unit.

A working point calculation method for meat according to at least one aspect of the present disclosure, includes: an image data acquisition step of acquiring image data indicating a photographed image of meat; and a working point acquisition step of acquiring working point data for identifying at least one working point to be given working by a robot in the meat, by inputting the image data acquired in the image data acquisition step to a learning model machine-learned using, as teacher data, the image data and correct answer data indicating a key point of the meat included in the photographed image.

### Advantageous Effects

According to the present disclosure, it is possible to provide a working point calculation system for meat, a meat processing system, and a working point calculation method for meat which are capable of identifying a working point with high accuracy while reducing a burden of preparing teacher data.

### BRIEF DESCRIPTION OF DRAWINGS

FIG. 1 is a conceptual diagram showing the overall configuration of a meat processing system according to an embodiment of the present disclosure.
FIG. 2 is a conceptual view showing meat according to an embodiment of the present disclosure.
FIG. 3 is a conceptual view of a captured image according to an embodiment of the present disclosure.
FIG. 4 is a graph conceptually showing a comparison result between estimation accuracy of a working point using a learning model and estimation accuracy of the working point using a conventional method.
FIG. 5 is an enlarged view conceptually showing a prescribed region in a left carcass according to an embodiment of the present disclosure.
FIG. 6 is an explanatory diagram conceptually showing teacher data according to an embodiment of the present disclosure.
FIG. 7 is a conceptual view showing the configuration of the learning model according to an embodiment of the present disclosure.
FIG. 8 is an explanatory view conceptually showing a first pressing device and a second pressing device according to an embodiment of the present disclosure.
FIG. 9 is a flowchart of a working point calculation method for meat according to an embodiment of the present disclosure.

### DETAILED DESCRIPTION

Some embodiments of the present disclosure will be described below with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present disclosure as defined in the appended claims.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a tubular shape shall not be construed as only the geometrically strict shape, but also includes a shape with unevenness or chamfered corners within the range in which the same effect can be achieved.

On the other hand, the expressions "comprising", "including" or "having" one constitutional element is not an exclusive expression that excludes the presence of other constitutional elements.

The same configurations are indicated by the same reference characters and may not be described again in detail.

### <1. Overview of meat processing system 1>

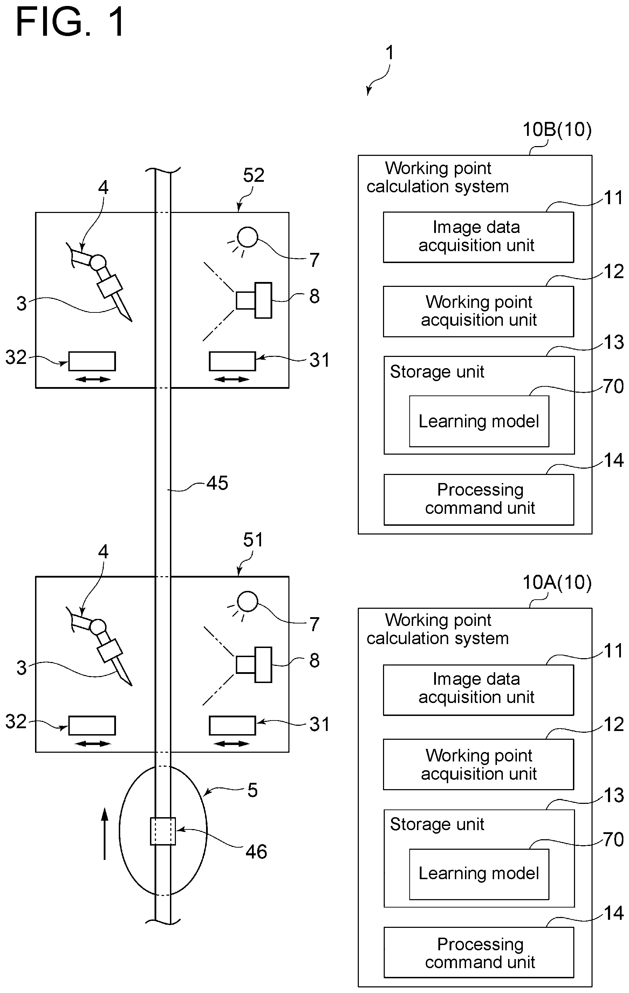

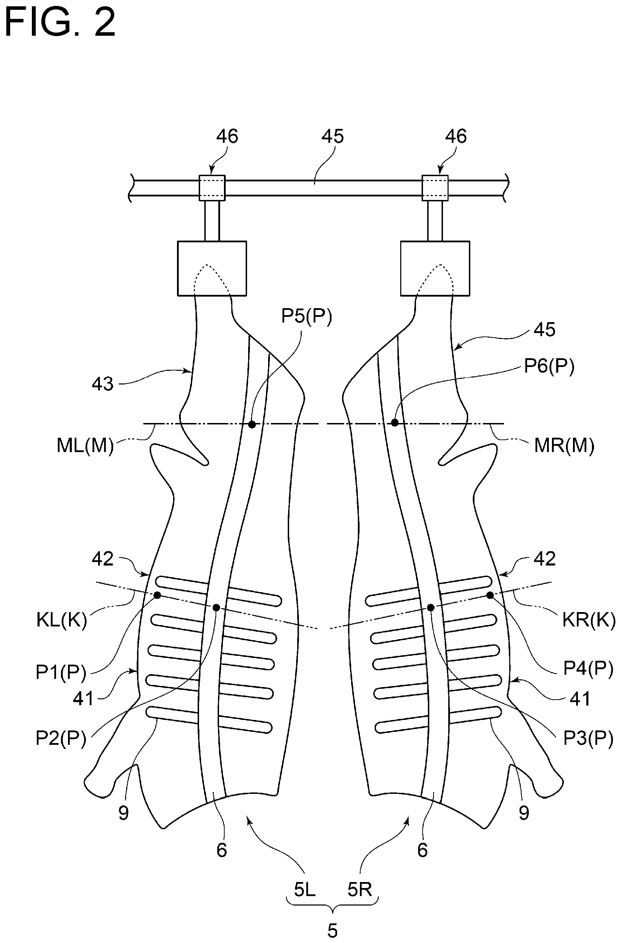

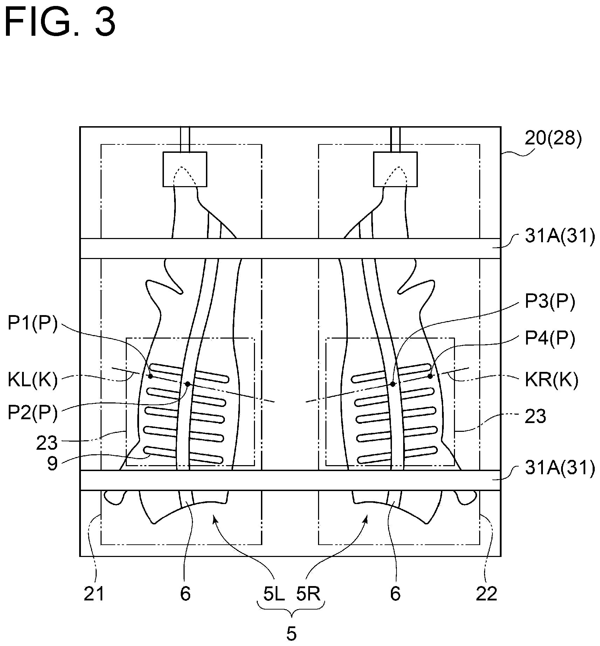

An overview of a meat processing system 1 is exemplified with reference to FIGs. 1 to 3. FIG. 1 is a conceptual diagram showing the overall configuration of the meat processing system 1 according to an embodiment of the present disclosure. FIG. 2 is a conceptual view showing meat 5 according to an embodiment of the present disclosure. FIG. 3 is a conceptual view of a photographed image 20 where the meat 5 is reflected according to an embodiment of the present disclosure.

The meat processing system 1 identifies a working point P of the meat 5 based on an output result from a learning model 70 where image data 28 indicating the photographed image 20 of the meat 5 is input, and executes a processing operation. The working point P is a point where a robot 4 gives working in the meat 5. The working given to the meat 5 is a concept that includes, for example, cutting, holding, pressing, hitting, deboning, irradiation of light, discharge of liquid, or a combination of these with respect to the meat 5, and is almost synonymous with processing. Hereinafter, a case where the working given to the meat 5 is cutting the meat 5 will be described as an example.

Further, the meat 5 is, for example, carcasses of livestock carcasses. More specifically, the meat 5 includes a left carcass 5L of the livestock and a right carcass 5R of the livestock. Each of the left carcass 5L and the right carcass 5R includes a spine 6 and a plurality of ribs 9, and at least some of these bones are exposed and visible. FIG. 2, 3 which is the conceptual view only illustrates the ribs 9 on a lower side among the plurality of ribs 9. Hereinafter, the left carcass 5L and the right carcass 5R may be referred to as the "meat 5" when not specifically distinguished. The rib 9 protrudes leftward from the spine 6 in the left carcass 5L shown in FIG. 2 and protrudes rightward from the spine 6 in the right carcass 5R shown in FIG. 2.

In the present embodiment, imaginary cutting line K, M in the meat 5 is defined by at least one working point P (see FIG. 2) identified based on the output result from the learning model 70. A fore quarter 41 is cut off from the meat 5 by cutting along the imaginary cutting line K, and the remaining meat 5 is divided into a middle part of a body 42 and a hind quarter 43 by cutting along the imaginary cutting line M.

The imaginary cutting line K of the present embodiment includes an imaginary cutting line KL defined by left working points P1, P2 in the left carcass 5L, and an imaginary cutting line KR defined by right working points P3, P4 in the right carcass 5R. On the other hand, the imaginary cutting line M includes an imaginary cutting line ML defined by a left working point P5 in the left carcass 5L and a first set angle, and an imaginary cutting line MR defined by a right working point P6 in the right carcass 5R and a second set angle. The left working point P1 and the right working point P4 are positioned between any two among the plurality of ribs 9, details of which will be described later. Both of the imaginary cutting lines ML and MR are set so as to pass through only a lumbar vertebrae among bones forming the meat 5, and the left working point P5 and the right working point P6 are set so as to overlap the lumbar vertebrae of the meat 5.

In another embodiment, the imaginary cutting line KR may be defined by the left working points P1, P2 and the right working point P3, and specifically, an imaginary line which is symmetrical with the imaginary cutting line KL and passes through the right working point P3 may be defined as the imaginary cutting line KR. Further, the imaginary cutting line ML may be defined by the left working point P5 and still another left working point. The same also applies to the imaginary cutting line MR.

In the following description, the left working points P1, P2, P5 and the right working points P3, P4, P6 may be referred to as the "working point P" when not specifically distinguished.

### <2. Exemplification of overall configuration of meat processing system 1>

The overall configuration of the meat processing system 1 according to an embodiment of the present disclosure will be exemplified with reference to FIG. 1, 2. The meat processing system 1 includes a horizontally extending rail 45 and a conveying device 46 configured to hold the meat 5 and convey it along the rail 45. The conveying device 46 of the present example is configured to convey the suspended left carcass 5L and right carcass 5R at once.

In another embodiment, the conveying device 46 may be configured to convey only either the left carcass 5L or the right carcass 5R in one conveyance, in which case the left carcass 5L and the right carcass 5R are conveyed alternately.

The meat processing system 1 further includes a first processing station 51 and a second processing station 52 which are disposed in order from an upstream side along a conveying line of the conveying device 46, and working point calculation systems for meat (hereinafter, may simply be referred to as "working point calculation systems") 10A and 10B which are disposed correspondingly to the first processing station 51 and the second processing station 52, respectively.

The first processing station 51 is configured to cut the meat 5 along the imaginary cutting line K. The second processing station 52 is configured to cut the meat 5 along the imaginary cutting line M. The first processing station 51 is controlled by the working point calculation system 10A, and the second processing station 52 is controlled by the working point calculation system 10B.

The first processing station 51 and the second processing station 52 have the same configuration, and the working point calculation system 10A and the working point calculation system 10B also have the same configuration. Hereinafter, the configurations of the first processing station 51 and the working point calculation system 10A will mainly be described, and the working point calculation system 10A and the working point calculation system 10B may be referred to as the "working point calculation system 10" when not specifically distinguished.

### <3. Exemplification of configurations of first processing station 51 and working point calculation system 10A>

The configurations of the first processing station 51 and the working point calculation system 10A according to an embodiment of the present disclosure will be exemplified with reference to FIG. 1, 3. The first processing station 51 includes a white light source 7, a photographing device 8 configured to photograph the meat 5 illuminated by the white light source 7 to generate the photographed image 20, a first pressing device 31 and a second pressing device 32 each configured to press the meat 5 during the photographing by the photographing device 8, and a robot 4 equipped with a cutter 3 for cutting the meat 5. The first pressing device 31 and the second pressing device 32 of the present example press the meat 5 to be sandwiched therebetween along the horizontal direction. The first pressing device 31 and the second pressing device 32 will be described later in detail.

As an example, the above-described photographing device 8 simultaneously photographs both the left carcass 5L and the right carcass 5R conveyed by the conveying device 46. Therefore, the photographed image 20 generated by the photographing device 8 includes a first region 21 in which the left carcass 5L of the livestock is reflected and a second region 22 in which the right carcass 5R of the livestock is reflected. In the present embodiment, each of the first region 21 and the second region 22 includes a prescribed region 23 in which the plurality of ribs 9 are reflected.

The working point calculation system 10A includes at least one processor and at least one memory. The processor is, for example, CPU, GPU, MPU, DSP, or a combination of these. The processor may be implemented by an integrated circuit of PLD, ASIC, FPGA, MCU, or the like. The memory is configured to temporarily or non-temporarily store various data, and is implemented by, for example, RAM, ROM, flash memory, or a combination of these. The working point calculation system 10A may be implemented by, for example, a combination of a control device such as a controller and a personal computer equipped with GPU.

As shown in FIG. 1, the above-described working point calculation system 10A includes an image data acquisition unit 11 configured to acquire the image data 28 (see FIG. 3) indicating the photographed image 20 of the meat 5, a storage unit 13 configured to store the learning model 70, a working point acquisition unit 12 configured to input the image data 28 acquired by the image data acquisition unit 11 to the learning model 70 to acquire working point data for identifying the working point P in the meat 5, and a processing command unit 14 configured to send a processing command to the robot 4 based on the working point data acquired by the working point acquisition unit 12.

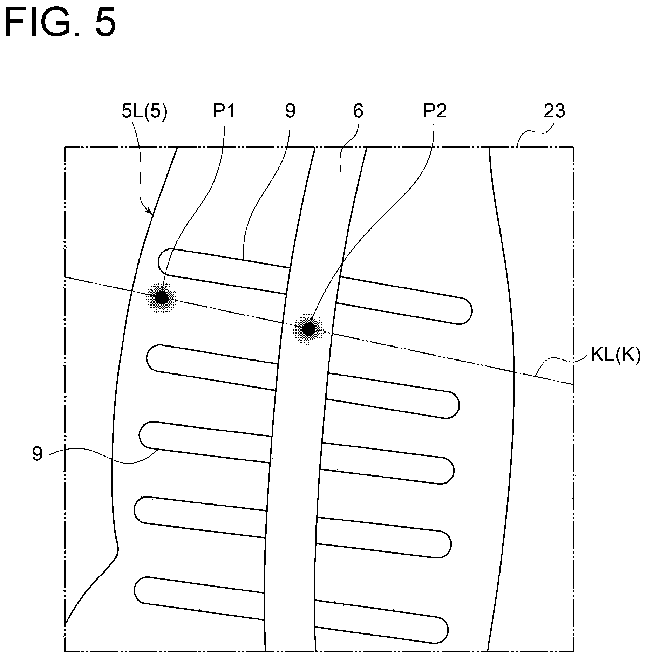

Although the details will be described later, the learning model 70 of the present example prepares, as teacher data 25 (see FIG. 5) for machine learning (deep learning), the image data 28 indicating the photographed image 20 and correct answer data 27 indicating a key point (feature point) of the meat 5 included in the photographed image 20. This key point corresponds to the working point P. That is, the working point data for identifying the working point P, which is an output result from the learning model 70, is data regarding coordinates of the working point P in the meat 5, and is, for example, distribution data showing a heat map centered on each working point P. The working point acquisition unit 12 (see FIG. 1) acquires the working point data and sends it to the processing command unit 14. The processing command unit 14 identifies the imaginary cutting line K by regarding coordinates with a highest likelihood as the working point P in each of four heat maps. Then, the processing command unit 14 sends a command to the robot 4 to perform a cutting operation along the imaginary cutting line K. That is, the robot 4 is configured to give working to the working point P acquired by the working point acquisition unit 12.

In another embodiment, the working point data output from the learning model 70 may be only the specific coordinates of the working point P.

### <4. Exemplification of comparison result between learning model 70 and conventional method>

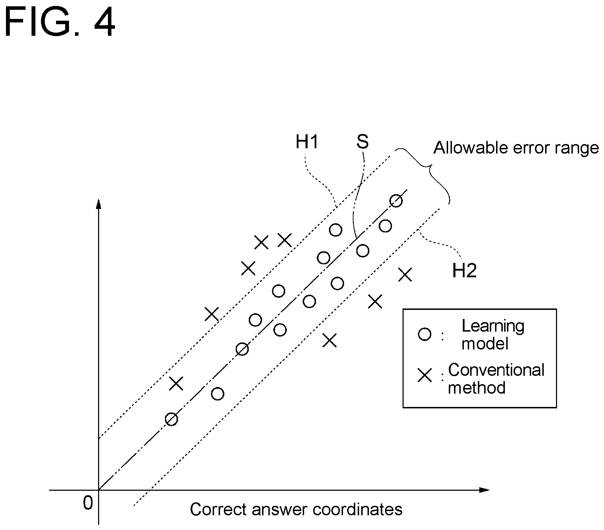

FIG. 4 is a graph conceptually showing a comparison result between estimation accuracy of the working point P using the learning model 70 of the working point calculation system 10A and estimation accuracy of the working point P using a conventional method disclosed in Patent Document 1. In this comparison, the meat 5 was prepared for which coordinates of the working point P to be a correct answer are known in advance, and the accuracy of estimated coordinates of the working point P respectively obtained by the learning model 70 and the conventional method was verified.

In the graph of FIG. 4, the correct answer coordinates are plotted on the horizontal axis and the obtained estimated coordinates are plotted on the vertical axis. Ideally, the obtained estimated coordinates coincide with the correct answer coordinates, and the closer the estimated coordinates are to a double-dotted chain line S, the higher the estimation accuracy. In FIG. 4, an allowable range of deviation from the ideal is indicated by dashed lines H1 and H2.

"o" shown in the graph is coordinates of the working point P identified based on the working point data acquired by the working point acquisition unit 12, and "×" is coordinates of the working point P acquired by the conventional method. As understood from FIG. 4, it was confirmed that the estimation accuracy of the working point P using the learning model 70 of the working point calculation system 10A is significantly higher than the estimation accuracy of the working point P using the conventional method disclosed in Patent Document 1.

With the above configuration, since the learning model 70 configured to output the working point data is a model that outputs the key point, the correct answer data 27 serving as the prepared teacher data 25 may be coordinate data associated with the image. That is, the correct answer data 27 may be coordinate data showing screen coordinates indicating the working point P. Therefore, the image data 28 prepared as the teacher data 25 need not be subjected to image processing such as edge processing or masking processing, realizing the simplification of the teacher data 25. Accordingly, the working point calculation system 10 for meat is implemented, which is capable of identifying the working point P with high accuracy while reducing a burden of preparing the teacher data 25.

In another embodiment, the first processing station 51 may be configured to hold the meat 5. In this case, the working point P acquired by the working point acquisition unit 12 indicates a holding position. In this case, the processing command unit 14 does not identify the imaginary cutting line K, M, and the robot 4 mounts a clamp instead of the cutter 3.

Further, in the present embodiment, the first processing station 51 of the meat processing system 1 includes the white light source 7 and the photographing device 8 configured to photograph the meat 5 illuminated by the white light source 7 to generate the photographed image 20, and does not include a blue light source.

With the above configuration, since the photographing device 8 photographs the meat 5 illuminated by the white light source 7 which is more versatile than a special light source such as the blue light source, the facility can be simplified.

### <5. Exemplification of working point data output from learning model 70 of working point calculation system 10A>

Details of the working point data output from the learning model 70 of the working point calculation system 10A will be exemplified with reference to FIG. 3, 5. FIG. 5 is an enlarged view conceptually showing the prescribed region 23 in the left carcass 5L according to an embodiment of the present disclosure.

The working point data output from the learning model 70 can be represented as the heat map centered on the working point P. This heat map shows, as a probability density distribution, a distribution of probabilities (likelihoods) that at least two pixels forming the photographed image 20 correspond to the working points P. In FIG. 5, the heat maps at the left working points P1, P2 are conceptually illustrated, and the illustration of the heat maps at the right working points P3, P4 is omitted. The working point data output from the learning model 70 is sent to the working point acquisition unit 12.

The processing command unit 14 configured to acquire the working point data from the working point acquisition unit 12 regards pixels with the highest likelihood in the heat map corresponding to each of the left working points P1 and P2 as the left working points P1 and P2. Whereby, the processing command unit 14 can identify the imaginary cutting line KL. Although detailed illustration is omitted, the processing command unit 14 can identify, by the same principle, the imaginary cutting line KR (see FIG. 2) based on the heat maps of the right working points P3, P4.

The left working point P1 and the right working point P4 of the present example are positioned between any two among the plurality of ribs 9, and the left working point P2 and the right working point P3 are positioned so as to overlap the spine 6. That is, the imaginary cutting line K is defined at a position avoiding the ribs 9. Whereby, the ribs 9 can be prevented from being damaged when the robot 4 (see FIG. 1) cuts the meat 5 with the cutter 3 along the imaginary cutting line K.

In order for the working point P to satisfy the above-described positional conditions, the teacher data 25 used in a learning stage of the learning model 70 just have to be prepared accordingly. The learning process of the learning model 70 will be described below.

### <6. Exemplification of learning process of learning model 70 of working point calculation system 10A>

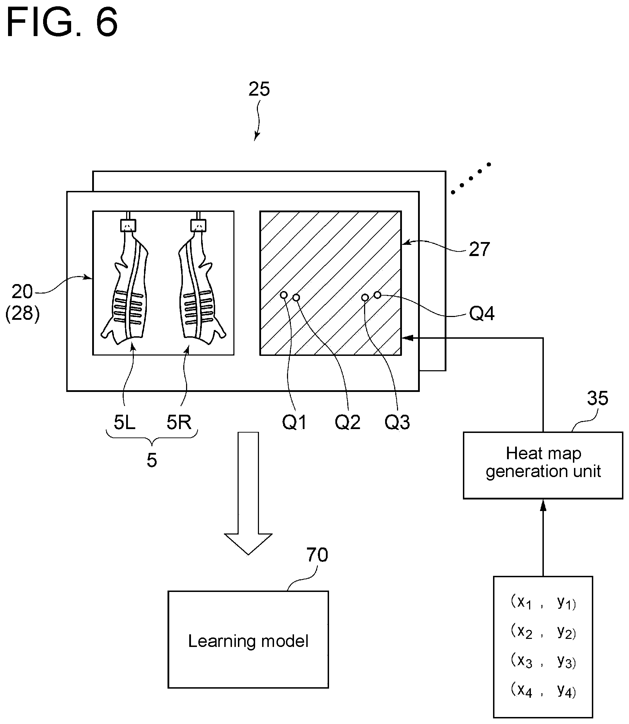

The learning process of the learning model 70 of the working point calculation system 10A will be exemplified with reference to FIG. 6. FIG. 6 is an explanatory diagram conceptually showing the teacher data 25 according to an embodiment of the present disclosure. The teacher data 25 is constituted by a plurality of sets of data, with the image data 28 indicating the photographed image 20 prepared for learning and the correct answer data 27 associated with the image data 28 as one set of data. The correct answer data 27 indicates the probability density distribution of the key points (feature points) of the meat 5 which are included in the photographed image 20 indicated by the corresponding image data 28.

The correct answer data 27 is prepared, for example, as follows.

An operator identifies, with regard to the photographed image 20 indicated by the image data 28, the coordinates of the working points P (the left working points P1, P2 and the right working points P3, P4) to be a correct answer. Then, the identified coordinates of the working points P is input to a heat map generation unit 35, generating the correct answer data 27. Herein, the heat map generation unit 35 is constructed by a prescribed algorithm, and is configured to generate a Gaussian distribution centered on the coordinates of each of the left working points P1, P2 and the right working points P3, P4 in the photographed image 20. This distribution indicates the probabilities (likelihoods) that each of the at least two pixels forming the photographed image 20 corresponds to the working point P. In the example of FIG. 6, correct answer heat maps respectively corresponding to the left working points P1, P2 and the right working points P3, P4 are denoted by reference signs Q1 to Q4. The resolution of the image of the correct answer data 27 representing the heat maps (Q1 to Q4) is the same as that of the photographed image 20.

A certain amount of the teacher data 25 in which the image data 28 and the correct answer data 27 are associated is input to the learning model 70. Learning is performed by adjusting various parameters such as a weighting factor in the learning model 70 so that a mean square error between the heat map output from the learning model 70 and the heat maps (Q1 to Q4) included in the correct answer data 27 converges to a prescribed value such as 0.

Such learning model 70 is realized by, for example, HRNet, ResNet, DenseNet, or the like.

The learning model 70 machine-learned using, as the teacher data 25, the correct answer data 27 indicating the probability density distribution of the key points is configured to output the probability density distribution of the working points P as the working point data.

A size and appearance of the meat 5 tend to vary. The variation in size of the meat 5 is caused by, for example, the growth of livestock. If the size of the meat 5 varies, the position to be the working point P of the meat 5 also varies, which may become a barrier to learning of the learning model 70. Further, the variation in appearance of the meat 5 is caused by, for example, a variation in process of obtaining the meat 5 from livestock. As an example, if the number of visible ribs 9 in the meat 5 varies, the relative positional relationship between the visible ribs 9 and the position to be the working point P fluctuates, which may hinder learning of the learning model 70. In this respect, with the above configuration, the learning model 70 takes in the probability density distribution of the key points to be a correct answer as the correct answer data 27 in the learning process. The various variations in the meat 5 as described above are comprehensively reflected in this probability density distribution. Therefore, even if the meat 5 reflected in the photographed image 20 of the image data 28 input to the learning model 70 that has finished learning varies, the probability density distribution indicated by the output working point P data is likely to include the position of the correct working point P. Thus, the working point P of the meat 5 can be identified with high accuracy.

Further, as described above, the photographed image 20 includes the first region 21 in which the left carcass 5L is reflected and the second region 22 in which the right carcass 5R is reflected, and the working point P has the left working points P1, P2 where the robot 4 gives working in the left carcass 5L and the right working points P3, P4 where the robot 4 gives working in the right carcass 5R.

With the above configuration, since the image data 28 is input to the single learning model 70, the working point acquisition unit 12 can acquire the working point data for identifying the left working points P1, P2 and the right working points P3, P4. Whereby, it is possible to reduce the number of learning models 70 stored in the storage unit 13. Therefore, both a calculation load for causing the learning model 70 to perform machine learning and a calculation load for obtaining the working point data by inputting the image data 28 to the learning model 70 that has finished learning are reduced. Thus, it is possible to reduce a calculation load for identifying the working point P.

Further, as described above, the photographed image 20 includes the prescribed region 23 in which the plurality of ribs 9 of the meat 5 are reflected. Then, the working point data output by the learning model 70 includes the working point data for identifying the left working point P1 and the right working point P4 disposed at the positions avoiding the plurality of ribs 9. This is achieved by designating the correct answer coordinates of the left working point P1 and the right working point P4, which are the basis of the correct answer data 27, so as to avoid the plurality of ribs 9 in the learning stage of the learning model 70.

With the above configuration, it is possible to give working to the meat 5 without damaging the ribs 9 of the meat 5. For example, if the meat 5 is cut so as to avoid the ribs 9, the broken ribs 9 are prevented from popping out and the occurrence of bone scraps of the ribs 9 are suppressed. Whereby, the appearance of the meat 5 can be kept good. Further, when a worker carries the processed meat 5, the safety of the worker can be ensured.

### <7. Exemplification of specific configuration of learning model 70>

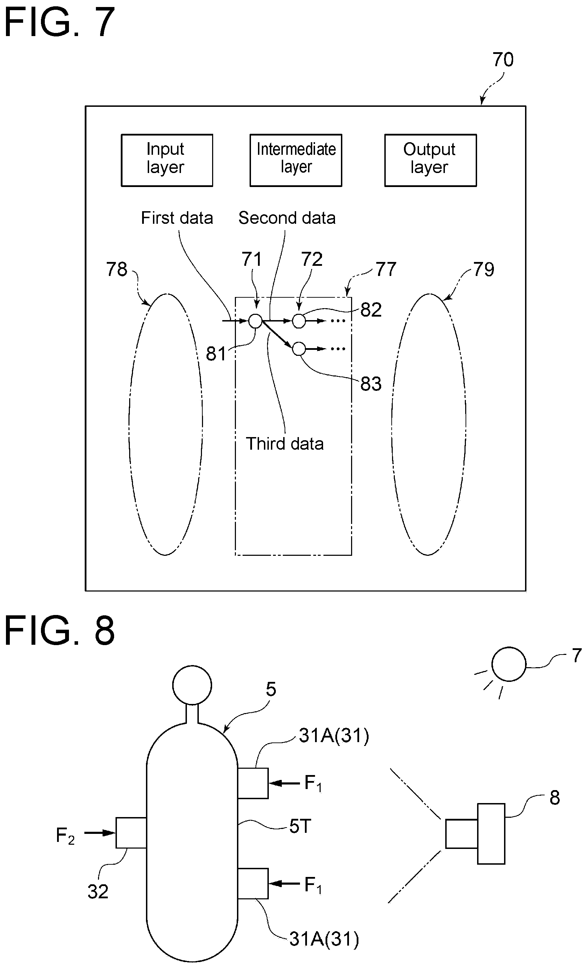

The specific configuration of the learning model 70 in the working point calculation system 10A will be exemplified with reference to FIG. 7. FIG. 7 is a conceptual view showing the configuration of the learning model 70 according to an embodiment of the present disclosure. The learning model 70 is a neural network including an input layer 78, an intermediate layer 77, and an output layer 79, and HRNet is adopted in the present embodiment. In HRNet, a first network configured such that image data having the same resolution as the image data 28 is transmitted from a lower layer to an upper layer, and a second network in which image data having a lower resolution than the image data 28 is transmitted from the middle of the first network to the upper layer are constructed in parallel. Then, the output layer 79 is configured to output the image data having the same resolution as the image data 28. In these networks disposed in parallel, learning is also performed in parallel.

Such intermediate layer 77 of the learning model 70 includes a first intermediate layer 71 and a second intermediate layer 72. Then, the first intermediate layer 71 includes a first neuron 81 where first data is input which is image data having the same resolution as the image data 28 input to the input layer 78. Further, the second intermediate layer 72 includes a second neuron 82 where second data which is image data having the same resolution as the image data 28 is input from the first neuron 81, and a third neuron 83 where low-resolution third data is input from the first neuron 81.

With the above configuration, since the network where the image data having the same resolution as the image data 28 is transmitted and the network where the image data having the lower resolution than the image data 28 is transmitted are constructed in parallel, it is possible to identify the working point P with higher accuracy.

### <8. Exemplification of first pressing device 31 and second pressing device 32 of first processing station 51>

The configurations of the first pressing device 31 and the second pressing device 32 of the first processing station 51 will be exemplified with reference to FIG. 3, 8. FIG. 8 is an explanatory view conceptually showing the first pressing device 31 and the second pressing device 32 according to an embodiment of the present disclosure.

The first pressing device 31 of the present embodiment is configured to horizontally press a photographing target portion 5T of the meat 5 (the left carcass 5L and the right carcass 5R) conveyed by the conveying device 46 to a position away from the photographing device 8 by a prescribed distance. In such embodiment, also in the learning stage of the learning model 70, the first pressing device 31 performs the same operation to capture the photographed image 20.

If a photographing distance varies which is a distance between the photographing device 8 and the meat 5 at the time of photographing, a reflection condition in the photographed image 20 varies greatly even if the similar meats 5 are photographed. As a result, this may become the barrier to learning of the learning model 70. In this respect, with the above configuration, since the photographing distance between the meat 5 and the photographing device 8 at the time of photographing is stabilized, the variation in the photographed image 20 can be suppressed and learning by the learning model 70 can be performed well. As a result, the working point P can be identified with high accuracy.

The first pressing device 31 of the present embodiment includes a pair of first pressing members 31A configured to enter a photographing range of the photographing device 8 and each configured to press the meat 5 at a position avoiding the working point P. The pair of first pressing members 31A are reflected in the photographed image 20 (see FIG. 3).

The first pressing members 31A of the present example are disposed in a pair on the upper and lower sides. Each of the first pressing members 31A is a bar extending along the conveying line of the conveying device 46. The lower first pressing member 31A of the pair of first pressing members 31A may be configured such that a vertical position can be adjusted in accordance with an operator's instruction. In such embodiment, also in the learning stage of the learning model 70, the pair of first pressing members 31A performs the same operation to capture the photographed image 20.

In another embodiment, the first pressing members 31A may be disposed in a pair on the left and right. In this case, each of the first pressing members 31A may be a bar extending along the vertical direction.

With the above configuration, since the pair of first pressing members 31A is stably reflected in the prescribed positions in the photographed image 20, a region where a difference in the meat 5 appears in the photographed image 20 is limited, making it possible to well perform learning by the learning model 70. As a result, the working point P can be identified with high accuracy.

The second pressing device 32 (see FIG. 8) is configured to horizontally press the meat 5 from a side opposite to the first pressing device 31 with a weaker pressing force than a pressing force of the first pressing device 31. The second pressing device 32 may press the meat 5 with a bar, for example, or may press the meat 5 with a columnar member such as a block. In the present embodiment, the second pressing device 32 presses the meat 5 after the pair of first pressing members 31A presses the photographing target portion 5T to the prescribed position. That is, the meat 5 is sandwiched between the first pressing device 31 and the second pressing device 32 and photographed by the photographing device 8.

A pressing force (F2 in FIG. 8) by the second pressing device 32 is less than a pressing force (F1 shown in FIG. 8) by the first pressing member 31A. Therefore, the meat 5 is not pushed back toward the photographing device 8 even if the second pressing device 32 presses the meat 5, but the photographing target portion 5T is flattened by sandwiching the meat 5 between the first pressing device 31 and the second pressing device 32.

With the above configuration, since the photographed meat 5 is sandwiched between the first pressing device 31 and the second pressing device 32, the photographing target portion 5T of the meat 5 is flattened and easily reflected in the photographed image 20. Further, since the pressing force of the second pressing device 32 is weaker than the pressing force of the first pressing device 31, it is possible to suppress the fluctuation in photographing distance. Whereby, the variation that hinders learning of the meat 5 reflected in the photographed image 20 can further be suppressed, making it possible to well perform learning by the learning model 70. As a result, the working point P can be identified with high accuracy.

### <9. Exemplification of configurations of second processing station 52 and working point calculation system 10B>

Returning to FIG. 1, the configurations of the second processing station 52 and the working point calculation system 10B will be exemplified.

As described above, the second processing station 52 has the same configuration as the first processing station 51, and the working point calculation system 10B has the same configuration as the working point calculation system 10A.

That is, the second processing station 52 includes the white light source 7, the photographing device 8, the first pressing device 31 and the second pressing device 32, and the robot 4. These components are the same as the first processing station 51. Further, the working point calculation system 10B includes the image data acquisition unit 11, the working point acquisition unit 12, the storage unit 13 storing the learning model 70, and the processing command unit 14. These components are the same as the working point calculation system 10A.

The meat 5 from which the fore quarter 41 has been cut off is reflected in the photographed image 20 acquired by the image data acquisition unit 11 of the working point calculation system 10B (not shown). Further, the learning model 70 in the working point calculation system 10B is machine-learned using, as teacher data 25, the correct answer data 27 that indicates the key points of the meat 5 corresponding to the left working point P5 and the right working point P6 of the meat 5. The left working point P5 and the right working point P6 prepared as the correct answer data 27 overlap only the lumbar vertebrae among the bones of the meat 5. In another embodiment, the learning model 70 corresponding to each of the left carcass 5L and the right carcass 5R may be prepared, or the single learning model 70 corresponding to both the left carcass 5L and the right carcass 5R may be prepared as in the working point calculation system 10A.

Further, an error may be detected by comparing a positional relationship of the working points P acquired by the working point acquisition unit 12 of the working point calculation system 10B with a positional relationship of the working points P acquired by the working point acquisition unit 12 of the working point calculation system 10A.

Specifically, a vertical positional relationship (hereinafter, referred to as a "first positional relationship") between the left carcass 5L and the right carcass 5R is determined by a vertical positional relationship between the left working points P1, P2 and the right working points P3, P4 acquired by the working point acquisition unit 12 of the working point calculation system 10A. For example, the amount of deviation in the vertical direction between the centers of gravity of the left carcass 5L and the right carcass 5R is the first positional relationship.

Next, a vertical positional relationship (hereinafter, referred to as a "second positional relationship") between the left carcass 5L and the right carcass 5R is determined by a vertical positional relationship between the left working point P5 and the right working point P6 acquired by the working point acquisition unit 12 of the working point calculation system 10B.

The first positional relationship and the second positional relationship are almost unchanged if the meat 5 is properly processed in order in the first processing station 51 and the second processing station 52. Conversely, the first positional relationship and the second positional relationship significantly change if some kind of trouble occurs during the processing of the meat 5. Therefore, if it is determined that a difference between the first positional relationship and the second positional relationship exceeds an allowable value, the working point calculation system 10B may send the notice accordingly before the processing by the robot 4. Whereby, the operator can appropriately process the meat 5 (for example, manually cut the meat 5).

### <10. Exemplification of acquisition method for working point>

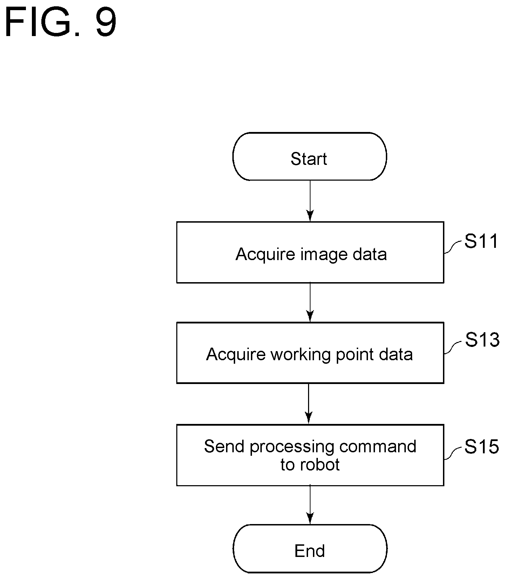

FIG. 9 is a flowchart of a working point P calculation method for the meat 5 according to an embodiment of the present disclosure. Hereinafter, the working point P calculation method by the working point calculation system 10A will be exemplified, and step may be abbreviated as "S". This flowchart is performed by, for example, the working point calculation system 10A.

First, the image data 28 indicating the photographed image 20 of the meat 5 conveyed to the first processing station 51 is acquired by the above-described image data acquisition unit 11 (S11).

Next, the image data 28 acquired in S11 is input to the learning model 70, and the working point data for identifying the working points P (the left working points P1, P2 and the right working points P3, P4) given by the robot 4 in the meat 5 is acquired by the working point acquisition unit 12 (S13).

Next, the processing command unit 14 sends the processing command to the robot 4 to perform the cutting operation along the imaginary cutting line K identified based on the working points P acquired by the working point acquisition unit 12 (S15). Whereby, the meat 5 is cut along the imaginary cutting line K.

### <11. Conclusion>

The contents described according to some aspects of the disclosure would be understood as follows, for instance.
1) A working point calculation system (10) for meat according to at least one embodiment of the present disclosure, includes: an image data acquisition unit (11) configured to acquire image data (28) indicating a photographed image (20) of meat (5); and a working point acquisition unit (12) configured to acquire working point data for identifying at least one working point (P) where a robot (4) gives working in the meat (5), by inputting the image data (28) acquired by the image data acquisition unit (11) to a learning model (70) machine-learned using, as teacher data (25), the image data (28) and correct answer data (27) indicating a key point of the meat (5) included in the photographed image (20).
   With the above configuration 1), since the learning model (70) configured to output the working point data is a model that outputs the key point, the correct answer data (27) serving as the prepared teacher data (25) may be coordinate data associated with the photographed image (20). Therefore, the teacher data (25) can be simplified. Accordingly, the working point calculation system (10) for meat is implemented, which is capable of identifying the working point (P) with high accuracy while reducing a burden of preparing the teacher data (25).
2) According to another aspect of the disclosure, the working point calculation system (10) for meat as defined in the above 1), wherein the learning model (70) machine-learned using, as the teacher data (25), the correct answer data (27) indicating a probability density distribution of the key point is configured to output a probability density distribution of the working point (P) as the working point data.
   The size or appearance of the meat (5) tends to vary. The variation in size of the meat (5) is caused by, for example, the growth of livestock. If the size of the meat (5) varies, the position to be the working point (P) of the meat (5) also varies, which may become a barrier to learning of the learning model (70). Further, the variation in appearance of the meat (5) is caused by, for example, a variation in process of obtaining the meat (5) from livestock. As an example, if the number of visible ribs (9) in the meat (5) varies, the relative positional relationship between the visually recognized ribs (9) and the position to be the working point (P) is not constant, which may hinder learning of the learning model (70). In this respect, with the above configuration 2), the learning model (70) takes in the probability density distribution of the key point to be the correct answer as the correct answer data (27) in the learning process. The various variations in the meat (5) as described above are comprehensively reflected in this probability density distribution. Therefore, even if the meat (5) reflected in the photographed image (20) of the image data (28) input to the learning model (70) that has finished learning varies, the probability density distribution indicated by the output working point data is likely to include the position of the correct working point (P). Thus, the working point (P) of the meat (5) can be identified with high accuracy.
3) According to another aspect of the disclosure, the working point calculation system (10) for meat as defined in the above 1) or 2), wherein the photographed image (20) includes a first region (21) in which a left carcass (5L) of livestock is reflected and a second region (22) in which a right carcass (5R) of the livestock is reflected, and wherein the at least one working point (P) includes: at least one left working point (P1, P2, P5) where the robot (4) gives working in the left carcass (5L); and at least one right working point (P3, P4, P6) where the robot (4) gives working in the right carcass (5R).
   With the above configuration 3), since the image data (28) is input to the learning model (70), the working point acquisition unit (12) can acquire the working point data for identifying each of the left working point (P1, P2, P5) and the right working point (P3, P4, P6). Whereby, it is possible to reduce the number of learning models (70), making it possible to reduce a calculation load for identifying the working point (P).
4) According to another aspect of the disclosure, the working point calculation system (10) for meat as defined in any of the above 1) to 3), wherein the photographed image (20) includes a prescribed region (23) in which a plurality of ribs (9) of the meat (5) are reflected, and wherein the learning model (70) is configured to output the working point data for identifying the working point (P) avoiding the plurality of ribs (9).
   With the above configuration 4), it is possible to give working to the meat (5) without damaging the ribs (9) of the meat (5), and the appearance of the meat (5) can be kept good.
5) According to another aspect of the disclosure, the working point calculation system (10) for meat as defined in any of the above 1) to 4), wherein the learning model (70) is a neural network that includes: a first intermediate layer (71) including a first neuron (81) where first data having the same resolution as the input image data (28) is input; and a second intermediate layer (72) including a second neuron (82) where second data having the same resolution as the image data (28) is input from the first neuron (81), and a third neuron (83) where low-resolution third data is input from the first neuron (81).
   With the above configuration 5), since the network where the image data having the same resolution as the image data (28) is transmitted and the network where the image data having the lower resolution than the image data (28) is transmitted are constructed in parallel, it is possible to identify the working point (P) with higher accuracy.
6) A meat processing system (1) according to another aspect of the present disclosure, includes: the working point calculation system (10) for meat as defined in any of the above 1) to 5); and the robot (4) configured to give working to the working point (P) acquired by the working point acquisition unit (12).
   With the above configuration 6), for the same reason as the above 1), the meat processing system (1) is implemented which is capable of identifying the working point (P) with high accuracy while reducing the burden of preparing the teacher data (25).
7) According to another aspect of the disclosure, the meat processing system (1) as defined in the above 6),
   wherein the robot (4) includes: a cutter (3) for cutting the meat (5) along an imaginary cutting line (K, M) obtained by the working point data acquired by the working point acquisition unit (12).
   With the above configuration 7), the meat (5) can be cut well in accordance with the working point data acquired by the working point acquisition unit (12).
8) According to another aspect of the disclosure, the meat processing system (1) as defined in the above 6) or 7), further includes: a white light source (7); and a photographing device (8) configured to photograph the meat (5) illuminated by the white light source (7) to generate the photographed image (20).
   With the above configuration 8), since the photographing device (8) photographs the meat (5) illuminated by the white light source (7) which is more versatile than a special light source such as the blue light source, the facility can be simplified.
9) According to another aspect of the disclosure, the meat processing system (1) as defined in any of the above 6) to 8), further includes: a photographing device (8) configured to photograph the meat (5) to generate the photographed image (20); and a first pressing device (31) configured to press the meat (5) to a position away from the photographing device (8) by a prescribed distance.
   If a photographing distance varies which is a distance between the photographing device (8) and the meat (5) at the time of photographing, a reflection condition in the photographed image (20) varies greatly even if the similar meats (5) are photographed. As a result, this may become the barrier to learning of the learning model (70). In this respect, with the above configuration 9), since the photographing distance between the meat (5) and the photographing device (8) at the time of photographing is stabilized, the variation in the photographed image (20) can be suppressed and learning by the learning model (70) can be performed well. As a result, the working point (P) can be identified with high accuracy.
10) According to another aspect of the disclosure, the meat processing system (1) as defined in the above 9), wherein the first pressing device (31) includes a pair of first pressing members (31A) configured to enter a photographing range of the photographing device (8) and each configured to press the meat (5) at a position avoiding the working point (P).
   With the above configuration 10), since the pair of first pressing members (31A) is stably reflected in the prescribed positions in the photographed image (20), a region where a difference in the meat (5) appears in the photographed image (20) is limited, making it possible to well perform learning by the learning model (70). As a result, the working point (P) can be identified with high accuracy.
11) According to another aspect of the disclosure, the meat processing system (1) as defined in the above 9) or 10), further includes: a second pressing device (32) configured to press the meat (5) from a side opposite to the first pressing device (31) with a weaker pressing force than a pressing force of the first pressing device (31).
   With the above configuration 11), since the photographed meat (5) is sandwiched between the first pressing device (31) and the second pressing device (32), the photographing target portion (5T) of the meat (5) is flattened and easily reflected in the photographed image (20). Further, since the pressing force of the second pressing device (32) is weaker than the pressing force of the first pressing device (31), it is possible to suppress the fluctuation in photographing distance. Whereby, the variation that hinders learning of the meat (5) reflected in the photographed image (20) can further be suppressed, making it possible to well perform learning by the learning model (70). As a result, the working point (P) can be identified with high accuracy.
12) A working point calculation method for meat according to another aspect of the present disclosure, includes: an image data acquisition step (S11) of acquiring image data (28) indicating a photographed image (20) of meat (5); and a working point acquisition step (S13) of acquiring working point data for identifying at least one working point (P) to be given working by a robot (4) in the meat (5), by inputting the image data (28) acquired in the image data acquisition step (S11) to a learning model (70) machine-learned using, as teacher data (25), the image data (28) and correct answer data (27) indicating a key point of the meat (5) included in the photographed image (20).

With the above configuration 12), for the same reason as the above 1), the working point calculation method for meat is implemented, which is capable of identifying the working point (P) with high accuracy while reducing the burden of preparing the teacher data (25).

### Reference Signs List

- 1:: Meat processing system
- 3:: Cutter
- 4:: Robot
- 5:: Meat
- 5L:: Left carcass
- 5R:: Right carcass
- 7:: White light source
- 8:: Photographing device
- 9:: Rib
- 10:: Working point calculation system
- 11:: Image data acquisition unit
- 12:: Working point acquisition unit
- 20:: Photographed image
- 21:: First region
- 22:: Second region
- 23:: Prescribed region
- 25:: Teacher data
- 27:: Correct answer data
- 28:: Image data
- 31:: First pressing device
- 31A:: First pressing member
- 32:: Second pressing device
- 70:: Learning model
- 71:: First intermediate layer
- 72:: Second intermediate layer
- 77:: Intermediate layer
- 81:: First neuron
- 82:: Second neuron
- 83:: Third neuron
- K, M:: Imaginary cutting line
- P:: Working point

## Claims

1. A working point calculation system (10) for meat, comprising:
an image data acquisition unit (11) configured to acquire image data (28) indicating a photographed image (20) of meat (5); and
a working point acquisition unit (12) configured to acquire working point data for identifying at least one working point (P) where a robot (4) gives working in the meat (5),
**characterized in that**:
the working point data is provided by inputting the image data (28) acquired by the image data acquisition unit (11) to a learning model (70) machine-learned using, as teacher data (25), the image data (28) and correct answer data (27) indicating a key point of the meat (5) included in the photographed image (20), the key point corresponding to the working point (P), **in that**
the learning model (70) is machine-learned using, as the teacher data (25), the correct answer data (27) indicating a probability density distribution of the key point of the meat (5) included in the photographed image (20); and **in that**
the learning model (70) is configured to output a probability density distribution of the working point (P) as the working point data which is data regarding coordinates of the working point (P) in the meat (5).

2. The working point calculation system (10) for meat according to claim 1,
wherein the learning model (70) is configured to output a heatmap centered on the working point (P) showing the probability density.

3. The working point calculation system (10) for meat according to claim 1 or 2,
wherein the photographed image (20) includes a first region (21) in which a left carcass (5L) of livestock is reflected and a second region (22) in which a right carcass (5R) of the livestock is reflected, and
wherein the at least one working point (P) includes:
at least one left working point (P1, P2, P5) where the robot (4) gives working in the left carcass (5L); and
at least one right working point (P3, P4, P6) where the robot (4) gives working in the right carcass (5R).

4. The working point calculation system (10) for meat according to any one of claims 1 to 3,
wherein the photographed image (20) includes a prescribed region (23) in which a plurality of ribs (9) of the meat (5) are reflected, and
wherein the learning model (70) is configured to output the working point data for identifying the working point (P) avoiding the plurality of ribs (9).

5. The working point calculation system (10) for meat according to any one of claims 1 to 4,
wherein the learning model (70) is a neural network that includes:
a first intermediate layer (71) including a first neuron (81) where first data having the same resolution as the input image data (28) is input; and
a second intermediate layer (72) including a second neuron (82) where second data having the same resolution as the image data (28) is input from the first neuron (81), and a third neuron (83) where low-resolution third data is input from the first neuron (81).

6. A meat processing system (1), comprising:
the working point calculation system (10) for meat according to any one of claims 1 to 5; and
the robot (4) configured to give working to the working point (P) acquired by the working point acquisition unit (12).

7. The meat processing system (1) according to claim 6,
wherein the robot (4) includes:
a cutter (3) for cutting the meat (5) along an imaginary cutting line (K, M) obtained by the working point data acquired by the working point acquisition unit (12).

8. The meat processing system (1) according to claim 6 or 7, further comprising:
a white light source (7); and
a photographing device (8) configured to photograph the meat (5) illuminated by the white light source (7) to generate the photographed image (20).

9. The meat processing system (1) according to any one of claims 6 to 8, further comprising:
a photographing device (8) configured to photograph the meat to generate the photographed image (20); and
a first pressing device (31) configured to press the meat (5) to a position away from the photographing device (8) by a prescribed distance.

10. The meat processing system (1) according to claim 9,
wherein the first pressing device (31) includes a pair of first pressing members (31A) configured to enter a photographing range of the photographing device (8) and each configured to press the meat (5) at a position avoiding the working point (P).

11. The meat processing system (1) according to claim 9 or 10, further comprising:
a second pressing device (32) configured to press the meat (5) from a side opposite to the first pressing device (31) with a weaker pressing force than a pressing force of the first pressing device (31).

12. A working point calculation method for meat, comprising:
an image data acquisition step (S11) of acquiring image data (28) indicating a photographed image (20) of meat (5); and
a working point acquisition step (S13) of acquiring working point data for identifying at least one working point (P) to be given working by a robot (4) in the meat (5),
**characterized in that**:
the working point data is provided by inputting the image data (28) acquired in the image data acquisition step (S11) to a learning model (70) machine-learned using, as teacher data (25), the image data (28) and correct answer data (27) indicating a key point of the meat (5) included in the photographed image (20), the key point corresponding to the working point (P); **in that**
the learning model (70) is machine-learned using, as the teacher data (25), the correct answer data (27) indicating a probability density distribution of the key point of the meat (5) included in the photographed image (20); and **in that**
in the working point acquisition step (S13), the learning model (70) is caused to output a probability density distribution of the working point (P) as the working point data which is data regarding coordinates of the working point (P) in the meat (5).

## Patentansprüche

1. Arbeitspunkt-Berechnungssystem (10) für Fleisch, umfassend:
eine Bilddaten-Erfassungseinheit (11), die dazu ausgestaltet ist, Bilddaten (28) zu erfassen, die ein fotografiertes Bild (20) von Fleisch (5) angeben; und
eine Arbeitspunkt-Erfassungseinheit (12), die dazu ausgestaltet ist, Arbeitspunktdaten zum Identifizieren mindestens eines Arbeitspunkts (P) zu erfassen, wo ein Roboter (4) das Fleisch (5) bearbeitet,
**dadurch gekennzeichnet, dass**:
die Arbeitspunktdaten durch Eingeben der Bilddaten (28), die von der Bilddaten-Erfassungseinheit (11) erfasst wurden, in ein Lernmodell (70) bereitgestellt werden, das unter Verwendung, als Lehrdaten (25), der Bilddaten (28) und korrekter Antwortdaten (27) maschinell gelernt wird, die einen Schlüsselpunkt des Fleisches (5) angeben, der in dem fotografierten Bild (20) enthalten ist, wobei der Schlüsselpunkt dem Arbeitspunkt (P) entspricht, dadurch dass
das Lernmodell (70) unter Verwendung, als die Lehrdaten (25), der korrekten Antwortdaten (27) maschinell gelernt wird, die eine Wahrscheinlichkeitsdichteverteilung des Schlüsselpunkts des Fleisches (5) angeben, der in dem fotografierten Bild (20) enthalten ist; und dadurch, dass
das Lernmodell (70) dazu ausgestaltet ist, eine Wahrscheinlichkeitsdichteverteilung des Arbeitspunkts (P) als die Arbeitspunktdaten auszugeben, die Daten sind, die Koordinaten des Arbeitspunkts (P) in dem Fleisch (5) betreffen.

2. Arbeitspunkt-Berechnungssystem (10) für Fleisch nach Anspruch 1,
wobei das Lernmodell (70) dazu ausgestaltet ist, eine Heatmap auszugeben, die auf den Arbeitspunkt (P) zentriert ist und die Wahrscheinlichkeitsdichte zeigt.

3. Arbeitspunkt-Berechnungssystem (10) für Fleisch nach Anspruch 1 oder 2,
wobei das fotografierte Bild (20) eine erste Region (21), in der ein linker Schlachtkörper (5L) von Vieh widergespiegelt wird, und eine zweite Region (22) umfasst, in der ein rechter Schlachtkörper (5R) des Viehs widergespiegelt wird, und
wobei der mindestens eine Arbeitspunkt (P) umfasst:
mindestens einen linken Arbeitspunkt (P1, P2, P5), wo der Roboter (4) den linken Schlachtkörper (5L) bearbeitet; und
mindestens einen rechten Arbeitspunkt (P3, P4, P6), wo der Roboter (4) den rechten Schlachtkörper (5R) bearbeitet.

4. Arbeitspunkt-Berechnungssystem (10) für Fleisch nach einem der Ansprüche 1 bis 3,
wobei das fotografierte Bild (20) eine vorgeschriebene Region (23) umfasst, in der eine Vielzahl von Rippen (9) des Fleisches (5) widergespiegelt werden, und
wobei das Lernmodell (70) dazu ausgestaltet ist, die Arbeitspunktdaten zum Identifizieren des Arbeitspunkts (P) unter Umgehung der Vielzahl von Rippen (9) auszugeben.

5. Arbeitspunkt-Berechnungssystem (10) für Fleisch nach einem der Ansprüche 1 bis 4,
wobei das Lernmodell (70) ein neuronales Netzwerk ist, das umfasst:
eine erste Zwischenschicht (71), die ein erstes Neuron (81) umfasst, wo erste Daten, welche die gleiche Auflösung wie die Eingabebilddaten (28) aufweisen, eingegeben werden; und
eine zweite Zwischenschicht (72), die ein zweites Neuron (82), wo zweite Daten, welche die gleiche Auflösung wie die Bilddaten (28) aufweisen, von dem ersten Neuron (81) eingegeben werden, und ein drittes Neuron (83) umfasst, wo dritte Daten mit niedriger Auflösung von dem ersten Neuron (81) eingegeben werden.

6. Fleischverarbeitungssystem (1), umfassend:
das Arbeitspunkt-Berechnungssystem (10) für Fleisch nach einem der Ansprüche 1 bis 5; und
den Roboter (4), der dazu ausgestaltet ist, den Arbeitspunkt (P), der von der Arbeitspunkt-Erfassungseinheit (12) erfasst wurde, zu bearbeiten.

7. Fleischverarbeitungssystem (1) nach Anspruch 6,
wobei der Roboter (4) umfasst:
einen Schneider (3) zum Schneiden des Fleisches (5) entlang einer gedachten Schnittlinie (K, M), die von den Arbeitspunktdaten erhalten wurde, die von der Arbeitspunkt-Erfassungseinheit (12) erfasst wurden.

8. Fleischverarbeitungssystem (1) nach Anspruch 6 oder 7, ferner umfassend:
eine Quelle (7) für weißes Licht; und
eine Fotografiervorrichtung (8), die dazu ausgestaltet ist, das Fleisch (5), das von der Quelle (7) für weißes Licht beleuchtet wird, zu fotografieren, um das fotografierte Bild (20) zu erzeugen.

9. Fleischverarbeitungssystem (1) nach einem der Ansprüche 6 bis 8, ferner umfassend:
eine Fotografiervorrichtung (8), die dazu ausgestaltet ist, das Fleisch zu fotografieren, um das fotografierte Bild (20) zu erzeugen; und
eine erste Drückvorrichtung (31), die dazu ausgestaltet ist, das Fleisch (5) zu einer Position zu drücken, die um einen vorgeschriebenen Abstand von der Fotografiervorrichtung (8) entfernt ist.

10. Fleischverarbeitungssystem (1) nach Anspruch 9,
wobei die erste Drückvorrichtung (31) ein Paar erste Drückelemente (31A) umfasst, die dazu ausgestaltet sind, in einen Fotografierbereich der Fotografiervorrichtung (8) einzutreten, und jeweils dazu ausgestaltet sind, das Fleisch (5) an einer Position unter Umgehung des Arbeitspunkts (P) zu drücken.

11. Fleischverarbeitungssystem (1) nach Anspruch 9 oder 10, ferner umfassend:
eine zweite Drückvorrichtung (32), die dazu ausgestaltet ist, das Fleisch (5) von einer Seite entgegengesetzt zur ersten Drückvorrichtung (31) mit einer schwächeren Drückkraft zu drücken als eine Drückkraft der ersten Drückvorrichtung (31).

12. Arbeitspunkt-Berechnungsverfahren für Fleisch, umfassend:
einen Bilddaten-Erfassungsschritt (S11) zum Erfassen von Bilddaten (28), die ein fotografiertes Bild (20) von Fleisch (5) angeben; und
einen Arbeitspunkt-Erfassungsschritt (S13) zum Erfassen von Arbeitspunktdaten zum Identifizieren mindestens eines Arbeitspunkts (P), der von einem Roboter (4) in dem Fleisch (5) zu bearbeiten ist,
**dadurch gekennzeichnet, dass**:
die Arbeitspunktdaten durch Eingeben der Bilddaten (28), die in dem Bilddaten-Erfassungsschritt (S11) erfasst wurden, in ein Lernmodell (70) bereitgestellt werden, das unter Verwendung, als Lehrdaten (25), der Bilddaten (28) und korrekter Antwortdaten (27) maschinell gelernt wird, die einen Schlüsselpunt des Fleisches (5) angeben, der in dem fotografierten Bild (20) enthalten ist, wobei der Schlüsselpunkt dem Arbeitspunkt (P) entspricht; dadurch, dass
das Lernmodell (70) unter Verwendung, als die Lehrdaten (25), der korrekten Antwortdaten (27) maschinell gelernt wird, die eine Wahrscheinlichkeitsdichteverteilung des Schlüsselpunkts des Fleisches (5) angeben, der in dem fotografierten Bild (20) enthalten ist; und dadurch, dass
in dem Arbeitspunkt-Erfassungsschritt (S13) das Lernmodell (70) veranlasst wird, eine Wahrscheinlichkeitsdichteverteilung des Arbeitspunkts (P) als die Arbeitspunktdaten auszugeben, die Daten sind, die Koordinaten des Arbeitspunkts (P) in dem Fleisch (5) angeben.

## Revendications

1. Système de calcul d'un point de travail (10) pour de la viande, comprenant :
une unité d'acquisition de données d'image (11) configurée pour acquérir des données d'image (28) indiquant une image photographiée (20) de viande (5) ; et
une unité d'acquisition de points de travail (12) configurée pour acquérir des données de point de travail permettant d'identifier au moins un point de travail (P) où un robot (4) effectue un travail sur la viande (5),
**caractérisé en ce que** :
les données de point de travail sont fournies en entrant les données d'image (28) acquises par l'unité d'acquisition de données d'image (11) dans un modèle d'apprentissage (70) appris par machine en utilisant, comme données d'apprentissage (25), les données d'image (28) et des données de réponse correcte (27) indiquant un point clé de la viande (5) incluse dans l'image photographiée (20), le point clé correspondant au point de travail (P), **en ce que**
le modèle d'apprentissage (70) est appris par machine en utilisant, comme données d'apprentissage (25), les données de réponse correcte (27) indiquant une distribution de densité de probabilité du point clé de la viande (5) incluse dans l'image photographiée (20) ; et **en ce que**
le modèle d'apprentissage (70) est configuré pour fournir une distribution de densité de probabilité du point de travail (P) en tant que données de point de travail qui sont des données concernant des coordonnées du point de travail (P) dans la viande (5).

2. Système de calcul d'un point de travail (10) pour de la viande selon la revendication 1,
dans lequel le modèle d'apprentissage (70) est configuré pour fournir une carte thermique centrée sur le point de travail (P) montrant la densité de probabilité.

3. Système de calcul d'un point de travail (10) pour de la viande selon l'une quelconque des revendications 1 ou 2,
dans lequel l'image photographiée (20) comprend une première région (21) dans laquelle se reflète une carcasse gauche (5L) d'un animal d'élevage et une deuxième région (22) dans laquelle se reflète une carcasse droite (5R) de l'animal d'élevage, et
dans lequel le au moins un point de travail (P) comprend :
au moins un point de travail gauche (P1, P2, P5) où le robot (4) effectue un travail dans la carcasse gauche (5L) ; et
au moins un point de travail droit (P3, P4, P6) où le robot (4) effectue un travail dans la carcasse droite (5R).

4. Système de calcul d'un point de travail (10) pour de la viande selon l'une quelconque des revendications 1 à 3,
dans lequel l'image photographiée (20) comprend une région prescrite (23) dans laquelle une pluralité de côtes (9) de la viande (5) sont reflétées, et
dans lequel le modèle d'apprentissage (70) est configuré pour fournir les données de point de travail permettant d'identifier le point de travail (P) en évitant la pluralité de côtes (9).

5. Système de calcul d'un point de travail (10) pour de la viande selon l'une quelconque des revendications 1 à 4,
dans lequel le modèle d'apprentissage (70) est un réseau de neurones qui comprend :
une première couche intermédiaire (71) comprenant un premier neurone (81) où sont entrées des premières données ayant la même résolution que les données d'image d'entrée (28) ; et
une deuxième couche intermédiaire (72) comprenant un deuxième neurone (82) où des deuxièmes données ayant la même résolution que les données d'image (28) sont entrées à partir du premier neurone (81), et un troisième neurone (83) où des troisièmes données à basse résolution sont entrées à partir du premier neurone (81).

6. Système de traitement de viande (1), comprenant :
le système de calcul d'un point de travail (10) pour de la viande selon l'une quelconque des revendications 1 à 5 ; et
le robot (4) configuré pour effectuer le travail au point de travail (P) acquis par l'unité d'acquisition du point de travail (12).

7. Système de traitement de viande (1) selon la revendication 6,
dans lequel le robot (4) comprend :
un dispositif de coupe (3) pour couper la viande (5) le long d'une ligne de coupe imaginaire (K, M) obtenue à partir des données de point de travail acquises par l'unité d'acquisition du point de travail (12).

8. Système de traitement de viande (1) selon l'une quelconque des revendications 6 ou 7, comprenant en outre :
une source de lumière blanche (7) ; et
un dispositif de photographie (8) configuré pour photographier la viande (5) éclairée par la source de lumière blanche (7) afin de générer l'image photographiée (20).

9. Système de traitement de viande (1) selon l'une quelconque des revendications 6 à 8, comprenant en outre :
un dispositif de photographie (8) configuré pour photographier la viande afin de générer l'image photographiée (20) ; et
un premier dispositif de pression (31) configuré pour presser la viande (5) vers une position éloignée du dispositif de photographie (8) d'une distance prédéterminée.

10. Le système de traitement de viande (1) selon la revendication 9,
dans lequel le premier dispositif de pressage (31) comprend une paire de premiers membres de pressage (31A) configurés pour entrer dans une plage de photographie du dispositif de photographie (8) et chacun configuré pour presser la viande (5) à une position évitant le point de travail (P).

11. Système de traitement de viande (1) selon l'une quelconque des revendications 9 ou 10, comprenant en outre :
un deuxième dispositif de pressage (32) configuré pour presser la viande (5) depuis un côté opposé au premier dispositif de pressage (31) avec une force de pressage plus faible que la force de pressage du premier dispositif de pressage (31).

12. Procédé de calcul d'un point de travail pour de la viande, comprenant :
une étape d'acquisition de données d'image (S11) consistant à acquérir des données d'image (28) indiquant une image photographiée (20) de viande (5) ; et
une étape d'acquisition d'un point de travail (S13) consistant à acquérir des données de point de travail pour identifier au moins un point de travail (P) sur la viande (5) sur lequel un robot (4) doit intervenir ;
**caractérisé en ce que** :
les données de point de travail sont fournies en entrant les données d'image (28) acquises lors de l'étape d'acquisition de données d'image (S11) dans un modèle d'apprentissage (70) appris par machine en utilisant, comme données d'apprentissage (25), les données d'image (28) et des données de réponse correcte (27) indiquant un point clé de la viande (5) incluse dans l'image photographiée (20), le point clé correspondant au point de travail (P) ; **en ce que**
le modèle d'apprentissage (70) est appris par machine en utilisant, comme données d'apprentissage (25), les données de réponse correcte (27) indiquant une distribution de densité de probabilité du point clé de la viande (5) incluse dans l'image photographiée (20) ; et **en ce que**
dans l'étape d'acquisition du point de travail (S13), le modèle d'apprentissage (70) est amené à produire une distribution de densité de probabilité du point de travail (P) en tant que données de point de travail qui sont des données concernant des coordonnées du point de travail (P) dans la viande (5).
